# EUROPEAN PATENT APPLICATION

(11) **EP 4 513 172 A1**
(43) Date of publication of application: **26.02.2025**
(21) Application number: 24195218.3
(22) Date of filing: 19.08.2024
(51) Int. Cl.: G01N 21/39, G01N 21/3554, G01N 21/31, G01N 21/17, G01S 17/95, B64D 15/20

(54) **INTEGRATED STANDOFF OPTICAL ICE DETECTION AND HUMIDITY SENSING**

(30) Priority: 21.08.2023 US 202318236041
(71) Applicant: ROSEMOUNT AEROSPACE INC., Burnsville, MN 55306-4898 (US)
(72) Inventor: LINCOLN, David L., Cromwell, CT, 06416 (US); RAY, Mark D., Burnsville, 55306 (US); JACKSON, Darren G., Prior Lake, 55372 (US); ANDERSON, Kaare Josef, Farmington, MN, 55024 (US); CASTILLO-GARZA, Jose-Rodrigo, West Hartford, CT (US); GORSKI, Michael T., Clinton, 06413 (US)
(74) Representative: Dehns

(57) **Abstract**

A system includes an optical ice detection (OID) sub-system (102) optically coupled to light collection optics (108). A water vapor differential absorption LIDAR (WV-DIAL) sub-system (104) is optically coupled to the OlD laser source or light collection optics. The OID sub-system and the WV-DIAL sub-system share at least a portion of an optical path of the light source or through the light collection optics. The OID sub-system, the WV-DIAL sub-system, and the illumination and light collection optics can all be aboard an aircraft. A method includes using a set of illumination and light collection optics abord an aircraft to obtain data indicative of optical ice detection (OID) and water vapor differential absorption LIDAR (WV-DIAL), e.g. to detect contrail forming conditions for the aircraft and/or predict persistence of contrails from the aircraft.

## Description

### BACKGROUND

### 1. Field

The present disclosure relates to stand-off sensing systems, and more particularly to sensing systems for aircraft to detect conditions such as humidity, presence of droplets and/or ice crystals, and the like, remove from the aircraft.

### 2. Description of Related Art

Traditionally relative humidity sensors for aircraft applications utilize laser absorption spectroscopy and diode laser hygrometers, and are limited to detecting relative humidity in close proximity to the aircraft. This has been useful meteorological data, however there is a growing need for predictions of contrail formation and persistence that would benefit from better relative humidity data. Increased spatial coverage with relatively accurate humidity data would improve contrail mitigation and avoidance strategies, with a positive impact on sustainability. This disclosure provides solutions for these needs.

### SUMMARY

A system includes an optical ice detection (OID) sub-system optically coupled to illumination and light collection optics. A water vapor differential absorption LIDAR (WV-DIAL) sub-system is optically coupled to the illumination and light collection optics. The OlD sub-system and the WV-DIAL sub-system share at least a portion of an optical path through the illumination and light collection optics.

The illumination and light collection optics can include at least one of a Cassegrain telescope, a Newtonian telescope, a parabolic mirror with a fiber optic bundle, and a parabolic mirror with a hole therethrough. The OlD sub-system and the WV-DIAL sub-system can share a returning portion of the optical path between the primary and secondary optical elements. The returning portion can bring returns to the OID sub-system and to the WV-DIAL sub-system. The OID sub-system and the WV-DIAL sub-system can be aligned along a single optical axis through a single window with respect to a field of view of the illumination and light collection optics. The illumination and light collection optics can include a reflector that conjoins optical paths of the OID-sub-system and of illuminators the WV-DIAL sub-system. It is also contemplated that the OID sub-system and the WV-DIAL sub-system can be on separate, non-colinear optical axes outside the illumination and light collection optics to survey two different fields of view.

The WV-DIAL sub-system can include a first illuminator configured to emit illumination in an absorption band for water vapor, and a second illuminator configured to emit illumination in a non-absorption band in an adjacent absorption trough for water vapor adjacent to the absorption band. The absorption band can be in the near IR band ranging from 780 to 2500 nm. The non-absorption band can be within 1.3 nm of a peak of the absorption band. Illumination paths of the first and second illuminators can be conjoined along an illuminator path passing into the illumination and light collection optics with an illuminator dichroic filter. Additionally, the WV-DIAL laser may be shared with the optical ice detector in the case where the OID/WV-DIAL sensing volumes overlap, or separate OlD / WV-DIAL optical paths may be implemented.

The WV-DIAL sub-system can include a sensor configured to detect returned illumination in the absorption band and in the non-absorption band. The sensor can share an optical path returning from the illumination and light collection optics with the OlD sub-system, wherein a main dichroic filter diverts return illumination to the OID sub-system on a first return path and to the sensor along a second return path. A main dichroic filter can divert return illumination to the OlD sub-system on a first return path and to the sensor of the WV-DIAL sub-system along a second return path.

The illumination and light collection optics can include a first telescope or mirror optically coupled to the OID sub-system for illumination and light collection, and a second telescope or mirror optically coupled to the WV-DIAL sub-system for illumination and light collection. The portion of the optical path shared between the OlD sub-system and the WV-DIAL sub-system can be an illuminator optical path, wherein the return optical paths need not be shared.

An analyzer can be operatively connected to the sensor of the WV-DIAL sub-system to determine humidity remote from the first and second sensors by correlating signals from the first and second sensors. The analyzer can be connected to or is part of a contrail persistence/prediction sub-system. The contrail persistence/prediction sub-system can be configured to predict formation of and/or persistence of contrails based on humidity data from the analyzer. The OID sub-system, the WV-DIAL sub-system, and the illumination and light collection optics can all be aboard an aircraft.

A method includes using a set of illumination and light collection optics aboard an aircraft to obtain data indicative of optical ice detection (OID) and water vapor differential absorption LIDAR (WV-DIAL). Using the set of illumination and light collection optics can include using the single telescope on a first field of view horizonal relative to the aircraft for OID and on a second field of view above or below the aircraft. The method can include using the data indicative of OID and WV-DIAL to detect contrail forming conditions for the aircraft and/or predict persistence of contrails from the aircraft. The method can include diverting the aircraft and/or additional aircraft to reduce contrail formation and/or persistence in response to detecting contrail forming conditions for the aircraft and/or predicting persistence of contrails from the aircraft.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing a single telescope for optical ice detection (OID) and water vapor differential absorption LIDAR (WV-DIAL); and
Figs. 2-7 are schematic views of the system of Fig. 1, showing different configurations of the illumination and light collection optics.

### DETAILED DESCRIPTION OF THE PREFERRED EMBODIMENTS

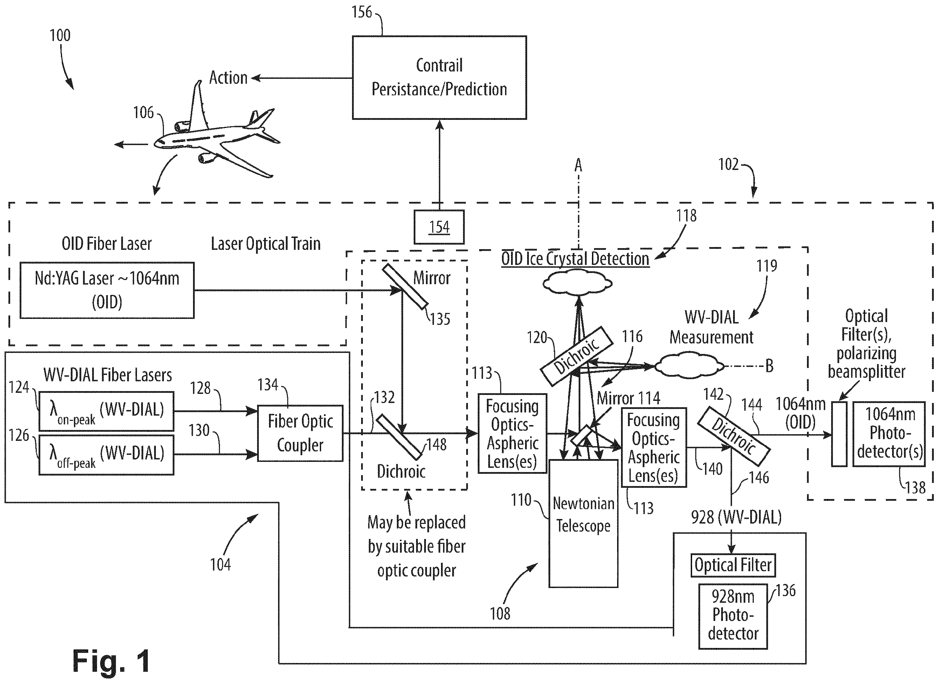

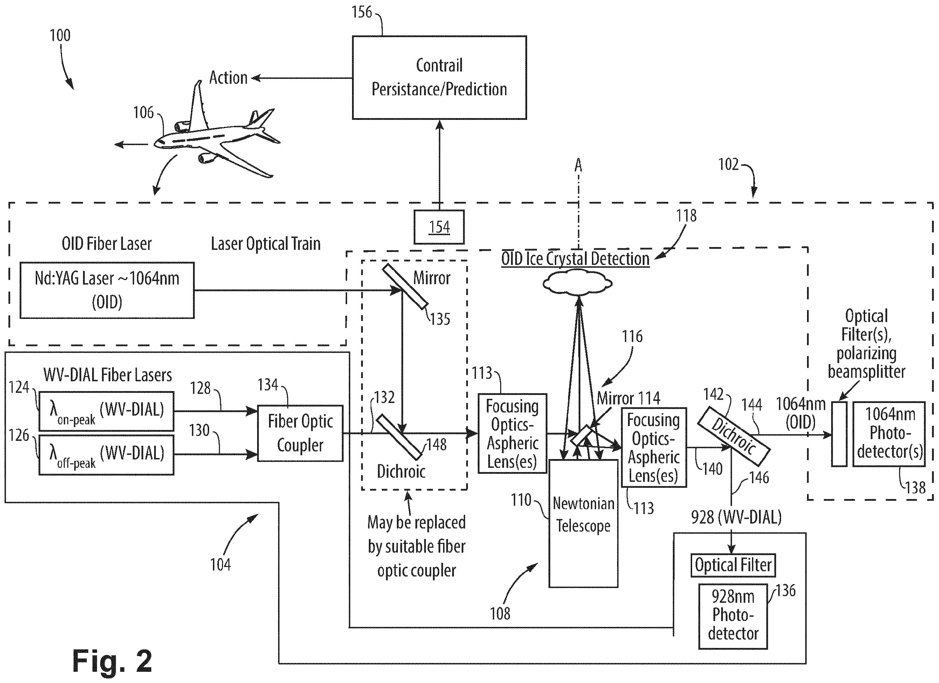

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments or aspects thereof are shown in Figs. 2-7. The systems and methods described herein can be used to provide compact, lightweight integrated optical ice detection (OID) and water vapor differential absorption LIDAR (WV-DIAL) such as for contrail detection and contrail persistence prediction aboard aircraft.

The system 100 includes an optical ice detection (OID) sub-system 102 optically coupled to illumination and light collection optics 108. OID systems and techniques, e.g. using circular polarization, are disclosed in commonly assigned U.S. Patent No. 10,816,661. A water vapor differential absorption LIDAR (WV-DIAL) sub-system 104 is optically coupled to the illumination and light collection optics 108. Ground based WV-DAIL systems and techniques are disclosed in U.S. Patent No. 10,605,900. In this disclosure, the OID sub-system 102 and the WV-DIAL sub-system 104 share at least a portion of an optical path through the illumination and light collection optics 108. This integration makes it practical for the OID sub-system 102, the WV-DIAL sub-system 104, and the illumination and light collection optics 108 to all be aboard an aircraft 106.

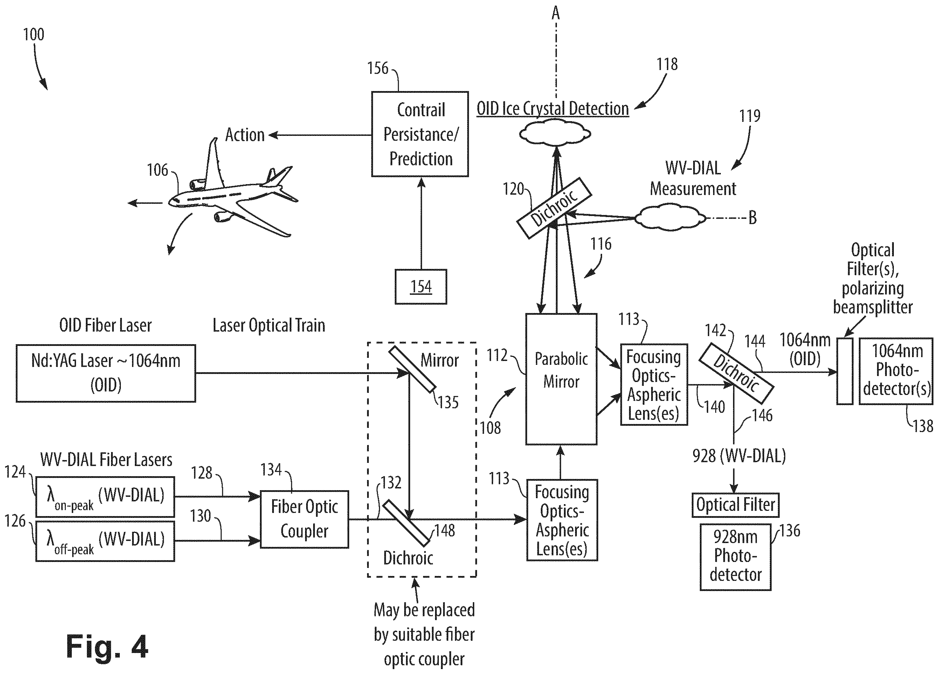

The illumination and light collection optics 108 include a Newtonian telescope 110 with a mirror 114, as shown in Figs. 1-3 and 7, a parabolic mirror 112, as shown in Figs. 4-6, or any other suitable optical elements for illuminating a scene and collecting a return of the illumination from the scene. For example, those skilled in the art will readily appreciate how to adapt a Cassegrain telescope for use with the system 100 in lieu of a Newtonian telescope or parabolic mirror. In utilizing a parabolic mirror 112 for the light collection optics, the illumination and collection optics 108 are coupled to the parabolic mirror via a fiber bundle. It is also contemplated that a parabolic mirror 112 can be used with a through hole along the optical axis to allow light from the illumination sources to pass through.

Focusing optics/aspheric lens(es) 113 are included on the illumination path entering the optics 108, and on the return path entering the sensor portions of the sub-systems 102, 104. The OID sub-system 102 and the WV-DIAL sub-system 104 share at least a returning portion 116 of the optical path between the scene and the optics 108. The returning portion 116 brings returns from the field of view (FOV) 118 remote from the aircraft to the OID sub-system 102 and to the WV-DIAL sub-system 104. In Figs. 1 and 4, a dichroic filter 120 can be included on the scene-side of the optics 108 to allow the OID sub-system 102 and the WV-DIAL sub-system 104 to interrogate different fields of view, e.g. through two different windows onboard the aircraft aligned along two different optical axes A and B, e.g. one FOV 118 forward facing horizonal from the aircraft 106, and a second FOV 119 and downward or upward from the aircraft, e.g. where the second FOV 119 is surveyed with its own window separate from the window for FOV 118.

It is also contemplated that both sub-systems 102, 104 can be aligned through a single window to interrogate the same field of view or substantially the same field of view by eliminating the dichroic filter 120 as shown in Figs. 2-6 and 5-7. In these configurations, the OID sub-system 102 and the WV-DIAL sub-system 104 are aligned along a single optical axis A, e.g. through a single window of the aircraft 106 with respect to the field of view 118 of the Cassegrain telescope 114.

The WV-DIAL sub-system 104 includes a first illuminator 124 configured to emit illumination in an absorption band for water vapor, and a second illuminator 126 configured to emit illumination in a non-absorption band in an adjacent absorption trough for water vapor adjacent to the absorption band. The absorption band can be any suitable absorption line in the near IR band ranging from 780 to 2500 nm. The non-absorption band is also any in the near IR band ranging from 780 to 2500 nm, ideally adjacent to the absorption line, e.g. an absorption line can be centered at 829.022 nm and a non-absorption band can be centered at 828.725 nm. Illumination paths 128, 130 of the first and second illuminators 124, 126 are conjoined along an illuminator path 132 passing into the illumination and light collection optics 108, e.g. with a fiber optic coupler 134.

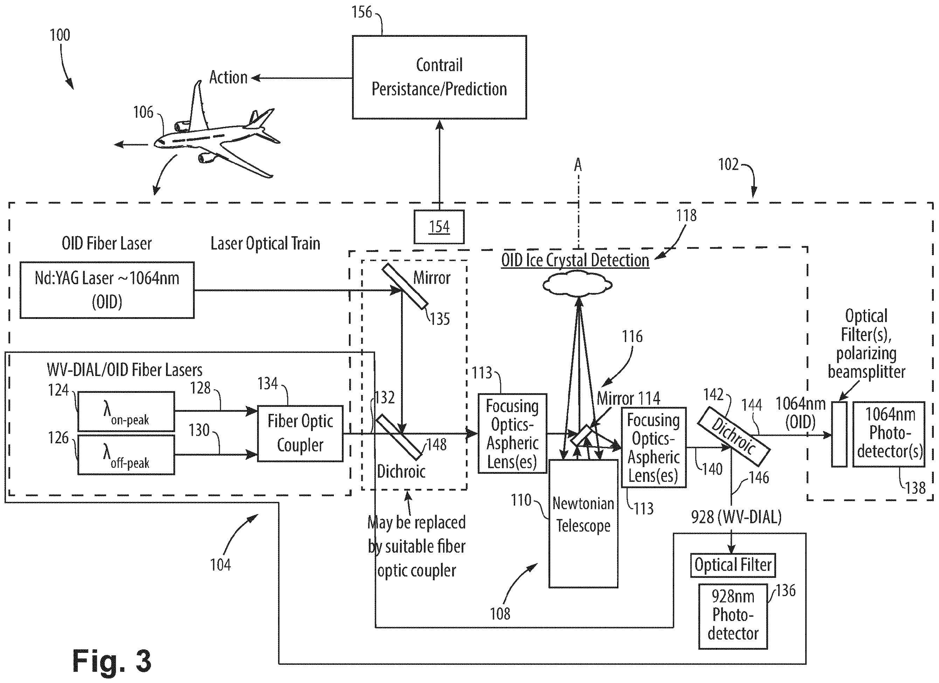

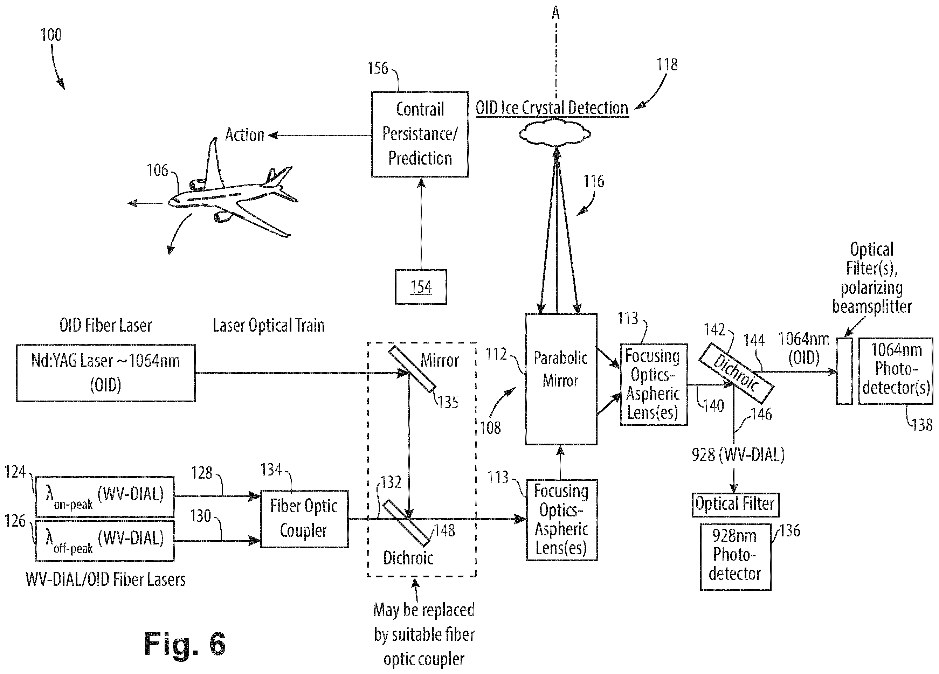

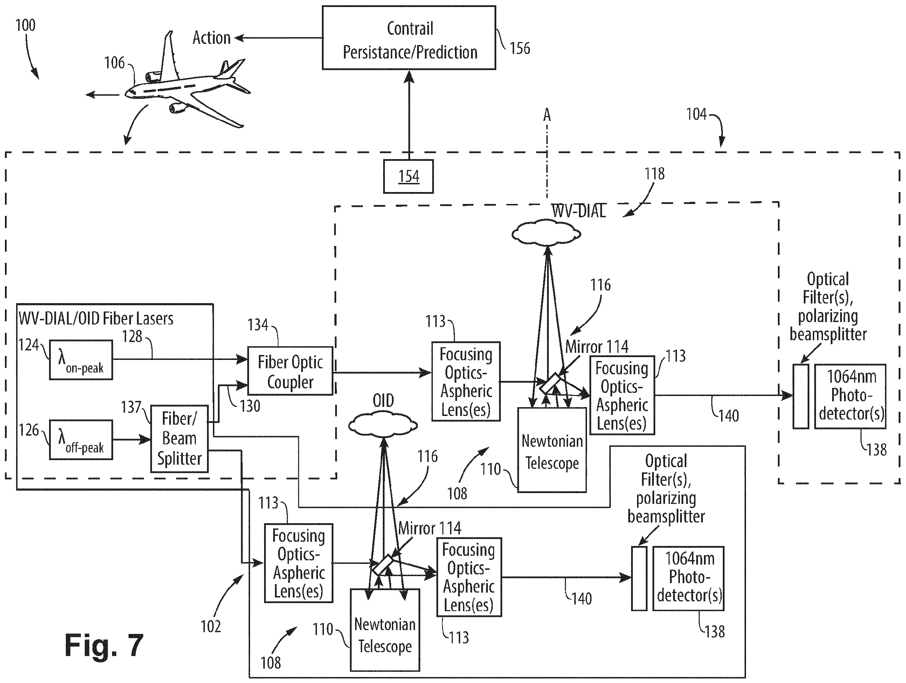

The WV-DIAL sub-system 104 includes a sensor 136 configured to detect returned illumination from the FOV 118 or 119 in the absorption band, and configured to detect returned illumination (from the FOV 118 or 119) in the non-absorption band. The sensor 136 shares a portion 140 of an optical path returning from the illumination and light collection optics 108 with the OID sub-system 102. A main dichroic filter 142 diverts return illumination to the OID sub-system 102 on a first return path 144 and to the first and second sensors 136, 138 along a second return paths 146, separately to each sensor 136, 138. The sensor 138 receives return illumination for the OID sub-system 102, and the sensor 136 receives the return illumination for the WV-DIAL sub-system 104. The mirror 135 and dichroic filter 148 in the laser optical train of Figs. 1, 2, 4, and 5 can be replaced with suitable fiber optic coupler 134 as in Figs. 3 and 6. In Fig. 7, a fiber/beam splitter 137 is used to allow the OID sub-system 102 to utilize one of the lasers 126 of the WV-DIAL sub-system 104, through a separate set of optics 108b from the optics 108a of the WV-DIAL sub-system 104. Either or both of the optics 108a, 108b can be Newtonian telescopes, parabolic mirrors, or the like.

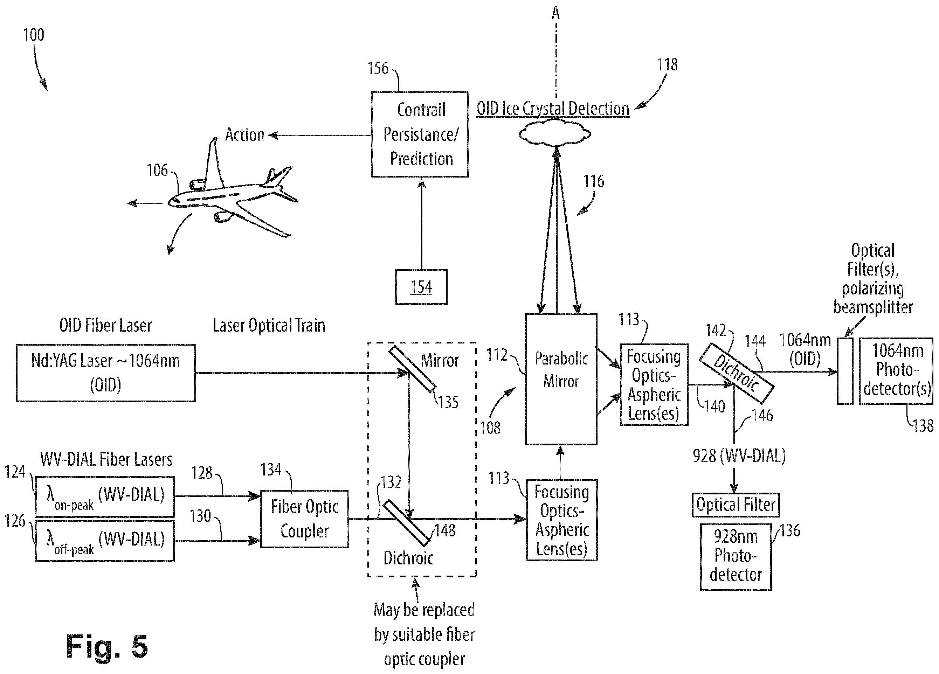

Fig. 2 shows a configuration of the system 100 similar to that in Fig. 1, but without the dichroic filter 120. Fig. 3 shows a configuration of system 100 similar to that in Fig. 2, but with the lasers for the OID sub-system 102 and WV-DIAL sub-system 104 shared as described above. Fig. 4 shows a configuration of the system 100 similar to that in Fig. 1, but utilizing a parabolic mirror 112 rather than a Newtonian telescope 110 in the optics 108. Fig. 5 shows a configuration of the system 100 with a parabolic mirror 120 similar to that in Fig. 4, but without the dichroic filter 120. The system 100 in Fig. 5 is also similar to that shown in Fig. 2, but with a parabolic mirror 112 in lieu of the Newtonian telescope 110 of Fig. 2. The configuration in Fig. 6 is similar to that in Fig. 3, but incorporates a parabolic mirror 112 rather than a Newtonian telescope 110.

With reference again to Fig. 1, regardless of whether the system 100 is configured as in Fig. 1 or any of Figs. 2-7, an analyzer 154 is operatively connected to the first and second sensors 136, 138 to determine humidity remote from the first and second sensors 136, 138 by correlating signals from the first and second sensors 136, 138. The analyzer 154 can also be operatively connected to the OID sub-system 102 to analyze OID for ice detection. The analyzer 154 is connected to or is part of a contrail persistence/prediction sub-system 156. The contrail persistence/prediction sub-system 156 is configured to predict formation of and/or persistence of contrails based on humidity data and or OID data from the analyzer 154, in possible addition to other sensors that may be connected to the analyzer 154 and/or sub-system 156. This multi-wavelength LIDAR based system 100 for detecting aircraft icing conditions and measuring standoff specific humidity employs multiple wavelengths. For WV-DIAL at least one on-peak wavelength is centered on a water vapor line, and at least second wavelength is located in a minimal absorption region adjacent to the absorption peak to minimize differences in atmospheric transmission to probe to isolate only the attenuation due to water vapor. The difference in the attenuation return signals at sensors 136, 138 can be directly correlated to the water vapor mixing ratio. The laser light (from one or more lasers of the OlD sub-system 102) can be circularly polarized and detected to discriminate ice crystals from water droplets and may use a separate receiving optical train and detectors.

A method includes using a single set of optics 108 abord an aircraft 106 to obtain data indicative of optical ice detection (OID) and water vapor differential absorption LIDAR (WV-DIAL) at a standoff distance, remote from the aircraft 106. This can include using the single telescope 114 (as shown in Figs. 1-3), a single parabolic mirror (as shown in Figs. 4-6), on a first field of view 118 horizonal relative to the aircraft 106 for OID and optionally on a second field of view 119 above or below the aircraft 106. Optionally, a second set of optics can be used, e.g. as in Fig. 7. The method includes using the data indicative of OID and WV-DIAL to detect contrail forming conditions for the aircraft 106 and/or predict persistence of contrails from the aircraft 106. The method includes diverting the aircraft 106 and/or additional aircraft, e.g. other aircraft following the aircraft 106, to reduce contrail formation and/or persistence in response to detecting contrail forming conditions for the aircraft 106 and/or predicting persistence of contrails from the aircraft 106.

Systems and methods as disclosed herein provide potential benefits including the following. They can discriminate between ice crystals and water droplets to detect aircraft icing conditions. Standoff humidity measurements allow for improving contrail persistence predictions, typically large in size are not laser lines. Systems and methods as disclosed herein can be installed and used onboard commercial aircraft. A hybrid sensor provides added value to the end user by integrating humidity sensing with optical ice detection functionality into a single sensor package.

The methods and systems of the present disclosure, as described above and shown in the drawings, provide for compact, lightweight integrated optical ice detection (OID) and water vapor differential absorption LIDAR (WV-DIAL) such as for contrail detection and contrail persistence prediction aboard aircraft. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A system comprising:
an optical ice detection, OID, sub-system (102) optically coupled to illumination and light collection optics (108); and
a water vapor differential absorption LIDAR, WV-DIAL, sub-system (104) optically coupled to the illumination and light collection optics, wherein the OID sub-system and the WV-DIAL sub-system share at least a portion of an optical path through the illumination and light collection optics.

2. The system as recited in claim 1, wherein the light collection optics (108) include at least one of a Cassegrain telescope, a Newtonian telescope, a parabolic mirror (112) with a fiber optic bundle, and a parabolic mirror with a hole therethrough.

3. The system as recited in claim 2, wherein the OlD sub-system and the WV-DIAL sub-system share a returning portion (116) of the optical path between the primary and secondary optical elements, wherein the returning portion brings returns to the OlD sub-system and to the WV-DIAL sub-system.

4. The system as recited in claim 3, wherein the OlD sub-system and the WV-DIAL sub-system are aligned along a single optical axis through a single window with respect to a field of view (118) of the illumination and light collection optics.

5. The system as recited in claim 4, wherein the illumination and light collection optics include a reflector that conjoins optical paths of the OID-sub-system and of illuminators the WV-DIAL sub-system.

6. The system as recited in claim 3, wherein the OlD sub-system and the WV-DIAL sub-system are on separate, non-colinear optical axis outside the illumination and light collection optics to survey two different fields of view.

7. The system as recited in any preceding claim, wherein the WV-DIAL sub-system includes a first illuminator (124) configured to emit illumination in an absorption band for water vapor, and a second illuminator (126) configured to emit illumination in a non-absorption band in an adjacent absorption trough for water vapor adjacent to the absorption band, and optionally wherein the absorption band is in a near IR band ranging from 780 to 2500 nm, and/or wherein the non-absorption band is within 1.3 nm of a peak of the absorption band.

8. The system as recited in claim 7, wherein illumination paths of the first and second illuminators are conjoined along an illuminator path passing into the illumination and light collection optics with an illuminator dichroic filter (120).

9. The system as recited in claim 7, wherein the WV-DIAL sub-system includes a sensor (136) configured to detect returned illumination in the absorption band and in the non-absorption band.

10. The system as recited in claim 9, wherein the sensor shares an optical path returning from the illumination and light collection optics with the OID sub-system, wherein a main dichroic filter diverts return illumination to the OID sub-system on a first return path and to the sensor along a second return path (146).

11. The system as recited in claim 9 or 10, further comprising an analyzer (154) operatively connected to the sensor determine humidity remote from the sensor by correlating peak and off peak signals from the sensor, and optionally wherein the analyzer is connected to or is part of a contrail persistence/prediction sub-system (156), wherein the contrail persistence/prediction sub-system is configured to predict formation of and/or persistence of contrails based on humidity data from the analyzer.

12. The system as recited in any preceding claim, wherein the illumination and light collection optics include a first telescope or mirror optically coupled to the OlD sub-system for illumination and light collection, and a second telescope or mirror optically coupled to the WV-DIAL sub-system for illumination and light collection, wherein the at least a portion of the optical path shared between the OID sub-system and the WV-DIAL sub-system is an illuminator optical path, but return optical paths are not shared.

13. The system as recited in any preceding claim, wherein the OlD sub-system, the WV-DIAL sub-system, and the illumination and light collection optics are all aboard an aircraft.

14. A method comprising:
using a set of illumination and light collection optics (108) aboard an aircraft to obtain data indicative of optical ice detection, OID, and water vapor differential absorption LIDAR, WV-DIAL.

15. The method as recited in claim 14, wherein using the set of illumination and light collection optics includes using the single telescope on a first field of view horizonal relative to the aircraft for OID and using the single telescope on a second field of view above or below the aircraft and/or further comprising using the data indicative of OID and WV-DIAL to detect contrail forming conditions for the aircraft and/or predict persistence of contrails from the aircraft, and/or further comprising diverting the aircraft and/or additional aircraft to reduce contrail formation and/or persistence in response to detecting contrail forming conditions for the aircraft and/or predicting persistence of contrails from the aircraft.
